# EUROPÄISCHE PATENTSCHRIFT

(11) **EP 0 681 128 B1**
(45) Veröffentlichungstag und Bekanntmachung des Hinweises auf die Patenterteilung: **08.07.1998**
(21) Anmeldenummer: 95106611.7
(22) Anmeldetag: 03.05.1995
(51) Int. Cl.: F16K 31/06

(54) **Magnetventil**
Solenoid valve
Electrovanne

(30) Priorität: 07.05.1994 DE 4416279
(43) Veröffentlichungstag der Anmeldung: 08.11.1995
(73) Patentinhaber: GRAU GMBH, D-69123 Heidelberg (DE)
(72) Erfinder: Blanz, Roland, D-69253 Heiligkreuzsteinach (DE)
(74) Vertreter: Rehberg, Elmar, Dipl.-Ing.

(56) Entgegenhaltungen:
- EP-A- 0 380 754
- DE-A- 2 528 873
- DE-C- 3 524 639
- FR-A- 2 565 660
- US-A- 3 011 753

## Beschreibung

Die Erfindung bezieht sich auf ein Magnetventil mit den im Oberbegriff des Anspruches 1 angegebenen Merkmalen. Ein solches Magnetventil wird insbesondere in Verbindung mit Druckluftbremsanlagen an Kraftfahrzeugen eingesetzt und dient zumindest dazu, Druckluft aus einem Vorratsanschluß zu einem Verbraucher zu schicken und in der anderen Stellung diesen Verbraucher zu entlüften.

Ein Magnetventil der eingangs beschriebenen Art ist aus der EP-A-380 754 bekannt. Es weist eine Spule und einen in einem Rohr verschiebbaren Kern auf, der mit einem Ventilkörper verbunden ist. Die Einheit aus Kern und Ventilkörper ist druckentlastet ausgebildet, wobei dem Ventilkörper ein gehäuseseitiger Sitz zugeordnet ist, dessen Durchmesser mit dem Außendurchmesser des Kerns übereinstimmt. Der Kern besitzt weiterhin eine Nut, in die eine Dichtung eingelegt ist, so daß der Kern nach Art eines Kolbens ausgebildet ist. Am Gehäuse sind drei Anschlüsse vorgesehen, und zwar einmal ein Anschluß für die Heranführung der Versorgungsleitung, zum anderen ein Anschluß für eine zu einem Verbraucher führende Leitung und schließlich ein Entlüftungsanschluß.

Der Erfindung liegt die Aufgabe zugrunde, ein Magnetventil der eingangs beschriebenen Art zu schaffen, welches zum Anschluß und zur Versorgung von zwei Verbrauchern geeignet ist, die beispielsweise der rechten und der linken Fahrzeugseite zugeordnet sein mögen und die beide in ähnlicher Weise angesteuert werden.

Erfindungsgemäß wird dies durch ein Magnetventil der eingangs beschriebenene Art erreicht, bei dem innerhalb und konzentrisch zum Ventilsitz gehäuseseitig ein weiterer Ventilsitz vorgesehen ist, der mit dem Ventilkörper des Kerns ein weiteres Ventil bildet, und daß zumindest der Ventilsitz mit dem größeren Durchmesser Schließfunktion hat, während der Ventilsitz mit dem kleineren Durchmesser entweder ebenfalls Schließfunktion oder aber lediglich Drosselfunktion besitzt.

Dem Ventilkörper des Kerns sind zwei Ventilsitze zugeordnet, die einander konzentrisch umgeben. Zumindest der Sitz mit dem größeren Durchmesser weist Schließfunktion auf. Der Sitz mit dem kleineren Durchmesser kann eine Drosselfunktion erbringen, so daß auf diese Art und Weise zwei Verbraucher, z. B. rechts und links am Fahrzeug anschließbar sind, die letztlich über eine Querdrossel miteinander in Verbindung stehen. Es ist aber auch möglich, daß beide Sitze eine exakte Schließfunktion erbringen.

Weitere Merkmale sind Gegenstand von Unteransprüchen.

Die Erfindung wird anhand bevorzugter Ausführungsbeispiele weiter erläutert und beschrieben. Es zeigen:
- Figur 1: einen schematisierten Schnitt durch die wesentlichen Teile eines Magnetventils als Zwei/Zwei-Wegeventil,
- Figur 2: einen Schnitt durch das Magnetventil in einer zweiten Ausführungsform mit einem Doppelventilkörper, z. B. als Drei/Zwei-Wegeventil,
- Figur 3: einen Schnitt durch eine dritte Ausführungsform des Magnetventils mit einem eigenen Entlüftungsventil und einem Schnellöseventil,
- Figur 4: einen Schnitt durch eine Ausführungsform des Magnetventils gemäß Erfindung mit zwei konzentrischen Ventilsitzen und
- Figur 5: eine Weiterbildung des Magnetventils gemäß Figur 4.

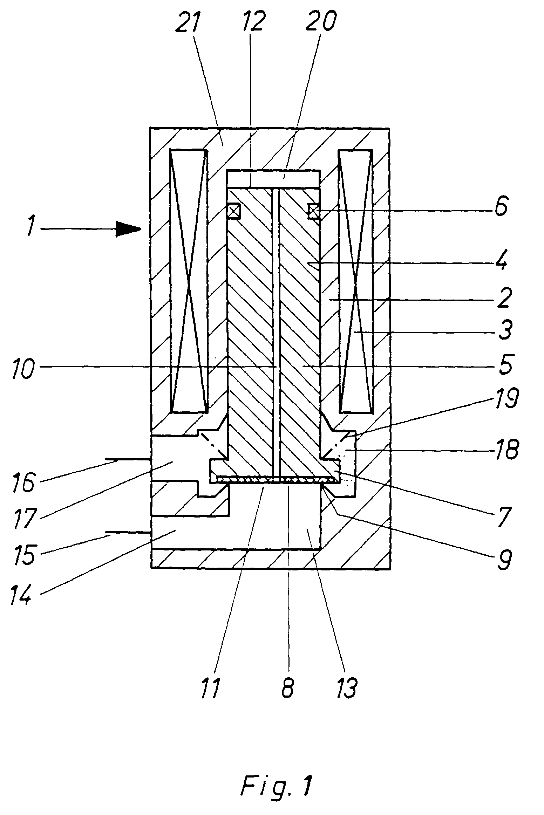

Die Ausführungsbeispiele der Figuren 1 bis 3 dienen nur zur Illustration der Erfindung, stellen jedoch keinen Bestandteil derselben dar.

Das in Figur 1 dargestellte Magnetventil 1 weist einen Spulenkörper 2 auf, in dem eine Spule 3 untergebracht ist. Der Spulenkörper 2 besitzt einen Führungszylinder 4, in welchem direkt ein Kern 5 gleitend gelagert ist. Der Kern 5 weist nach Art eines Kolbens eine Dichtung 6 auf. Der Kern 5 trägt darüberhinaus einen Ventilkörper 7, der eine Ventilplatte 8 aus elastischem Material aufweisen kann. Dem Ventilkörper 7 bzw. der Ventilplatte 8 ist ein Ventilsitz 9 zugeordnet, der als eingezogener Gehäuserand des Spulenkörpers 2 ausgebildet ist. Der Ventilsitz 9 weist einen mit der Dichtung 6 übereinstimmenden Durchmesser auf. Eine Bohrung 10 durchsetzt den Kern 5 zwischen seiner ventilkörperseitigen Stirnfläche 11 und einer Stirnfläche 12 am anderen Ende des Kerns 5. Die Stirnflächen 11 und 12 sind einander entgegengesetzt gerichtet. Die Stirnfläche 11 ist einem Wirkraum 13 ausgesetzt, der in dauernder Verbindung zu einem Anschluß 14 steht, von dem eine angedeutete Leitung 15 zu einem Verbraucher abzweigt. Eine Leitung 16 führt von einer Druckluftquelle und einem Druckluftvorratsbehälter zu einem Anschluß 17 am Spulenkörper 2 und zu einer Vorratskammer 18. In der Vorratskammer 18 kann eine Schließfeder 19 vorgesehen sein. Die Schließfeder 19 könnte auch an anderer Stelle des Magnetventils angeordnet sein, beispielsweise benachbart zu der Stirnfläche 12. Wichtig ist nur, daß die Kraft der Schließfeder 19 den Kern 5 mit dem Ventilkörper 7 in Schließrichtung des Ventiles 8, 9 belastet.

Im Anschluß an die Stirnfläche 12 ist ein Wirkraum 20 vorgesehen, der über die Bohrung 10 in dauernder Verbindung zu dem Wirkraum 13 steht. Insoweit ist der Kern 5 druckentlastet ausgebildet. Über die Bohrung 10 besteht auch Verbindung zwischen dem Anschluß 14 und dem Wirkraum 20. Andererseits unterteilt die Dichtung 6 den Wirkraum 20 von der Vorratskammer 18 und damit die Anschlüsse 14 und 17 voneinander.

Das Magnetventil gemäß Figur 1 ist in der Schließstellung dargestellt. Der Stromkreis zu der Spule 3 ist geöffnet, und das Ventil 8, 9 wird allein durch die Schließkraft der Schließfeder 19 in der geschlossenen Stellung gehalten. Die in der Vorratskammer 18 anstehende Vorratsluft übt keine Kraft auf den Kern 5 aus, da der Durchmesser der Dichtung 6 mit dem Durchmesser des Ventilsitzes 9 übereinstimmt.

Wenn die Spule 3 erregt, also der Stromkreis geschlossen wird, wird der Kern 5 in Richtung auf ein die Magnetlinien bündelndes Joch 21, welches zweckmäßig aus Eisen besteht oder einen entsprechenden Einsatz im ansonsten aus Kunststoff bestehenden Spulenkörper 2 darstellt, angezogen. Bei dieser Bewegung muß lediglich die Reibung der Dichtung 6 sowie die Kraft der Schließfeder 19 überwunden werden. Nach dem Öffnen des Ventiles 8, 9 strömt Vorratsluft aus der Vorratskammer 18 über den Wirkraum 13, den Anschluß 14 und die Leitung 15 zum Verbraucher. Über die Bohrung 10 wird sich auch im Wirkraum 20 ein entsprechender Druck einstellen, so daß der Kern 5 weiterhin druckentlastet bleibt.

Wird andererseits der Stromkreis geöffnet, dann führt die Schließfeder 19 den Kern 5 mit dem Ventilkörper 7 in die Schließstellung. Der Anschluß eines Druckluftvorrates am Anschluß 17 und der eines Verbrauchers am Anschluß 14 ist grundsätzlich auch umkehrbar.

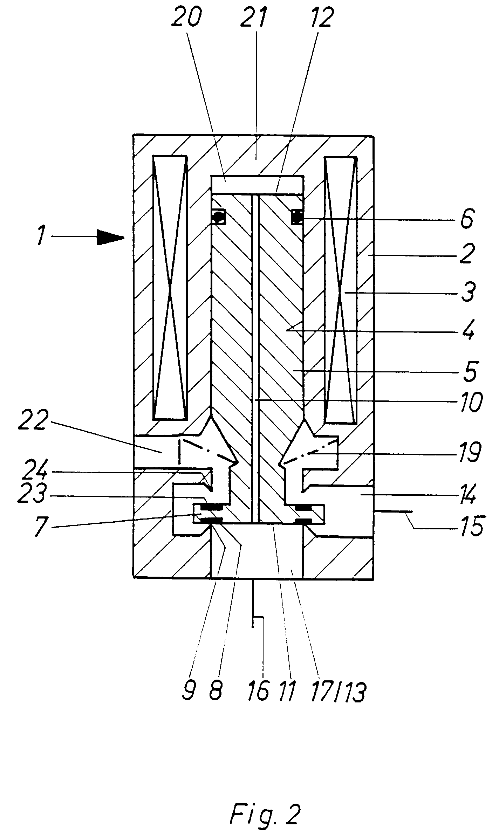

Das in Figur 2 dargestellte Magnetventil ist als Drei/Zwei-Wegeventil ausgebildet. Neben den Anschlüssen 17 für Vorratsluft und 14 für eine zu einem Verbraucher 15 führende Leitung ist noch ein Anschluß 22 vorgesehen, der als Entlüftungsanschluß in die Atmosphäre führt. Der Ventilkörper 7 besitzt eine ringförmige Ventilplatte 8 zur Realisierung des Einlaßventiles 8, 9. Eine weitere Ventilplatte 23 ist einem Ventilsitz 24 zugeordnet, so daß hier neben dem Einlaßventil 8, 9 ein Auslaßventil 23, 24 gebildet ist. Der Ventilkörper 7 ist damit als Doppelventilkörper ausgebildet. Auch hier ist der Ventilkörper 7 entweder direkt einstückig mit dem Kern 5 ausgebildet, wobei zum Zwecke der Montage der Spulenkörper 2 entsprechend unterteilt sein müßte. Andererseits ist es auch möglich, den Kern 5 mit seinem im Bereich der Spule 3 befindlichen Teil einerseits und seinem den Ventilkörper 7 bildenden anderen Teil zweiteilig auszubilden und miteinander dichtend zu verschrauben.

Das Magnetventil gemäß Figur 2 ist in der nicht-erregten Stellung dargestellt. Auch hier ist der Kern 5 druckentlastet ausgebildet, so daß die schwache Kraft der Schließfeder 19 in der Lage ist, das Einlaßventil 8, 9 in der Schließstellung zu halten. Bei Erregung der Spule 3 wird das Auslaßventil 23, 24 geschlossen und das Einlaßventil 8, 9 geöffnet, so daß der vorher entlüftete Verbraucher nunmehr mit Druckluft versorgt wird. Es ist erkennbar, daß auch hier die Durchmesser der Ventilplatten 8 und 23 bzw. der Ventilsitze 9 und 24 gleichen Durchmesser wie die Dichtung 6 des Kerns 5 aufweisen.

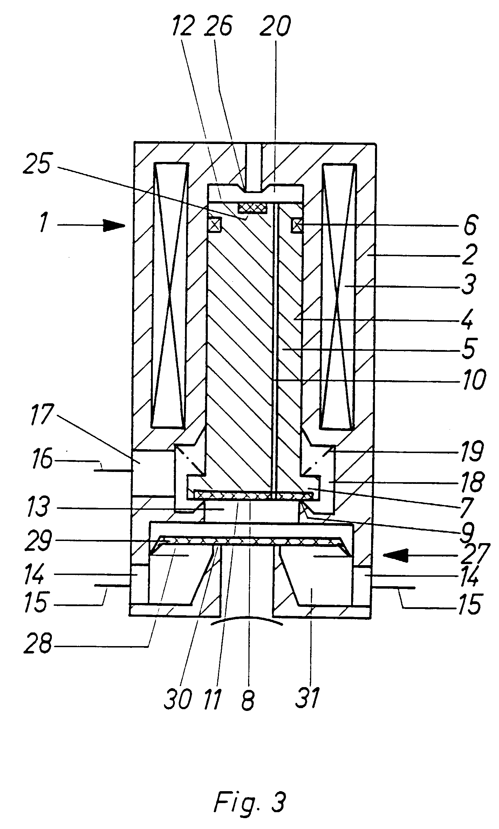

Die Ausführungsform des Magnetventils gemäß Figur 3 ist zunächst weitgehend ähnlich zu der gemäß Figur 1 aufgebaut, weshalb auf die dortige Beschreibung verwiesen werden kann. Zusätzlich weist der Kern 5 im Bereich seiner Stirnfläche 12 eine Ventilplatte 25 aus elastischem Material auf, die mit einem vorstehenden Rand 26 ein kleinquerschnittiges Auslaßventil bildet. Zusätzlich ist ein Schnellöseventil 27 vorgesehen. Das Schnellöseventil weist eine bewegliche Ventilmembran 28 aus elastischem Material auf, die auf ihrem größten Durchmesser eine Überströmlippe 29 trägt. Auf einem kleineren Durchmesser bildet die Ventilmembran mit einem vorspringenden Gehäuserand 30 ein vergleichsweise großquerschnittiges Entlüftungsventil 28, 30. Über einen Verteilungsraum 31 können zwei Leitungen zu Verbrauchern angeschlossen sein.

Das Magnetventil gemäß Figur 3 ist in der nicht-erregten Stellung dargestellt. Die Schließfeder 19 hält das Einlaßventil 8, 9 geschlossen. Die Verbraucher sind entlüftet. Bei Erregung der Spule 3 wird der Kern 5 verschoben, das Einlaßventil 8, 9 geöffnet und das Auslaßventil 25, 26 geschlossen. Damit strömt Druckluft aus der Vorratskammer 18 in den Wirkraum 13 und über die Überströmlippe 29 der Ventilmembran 28 zu den Verbrauchern. Die Verbraucher werden belüftet. Zum Zwecke der Entlüftung wird der Stromkreis zur Spule 3 geöffnet. Die Schließfeder 19 schließt das Einlaßventil 8, 9 und öffnet das Auslaßventil 25, 26. Durch die Öffnung dieses Auslaßventils wird das Auslaßventil 28, 30 am Schnellöseventil 27 geöffnet und damit die Verbraucher schnell entlüftet.

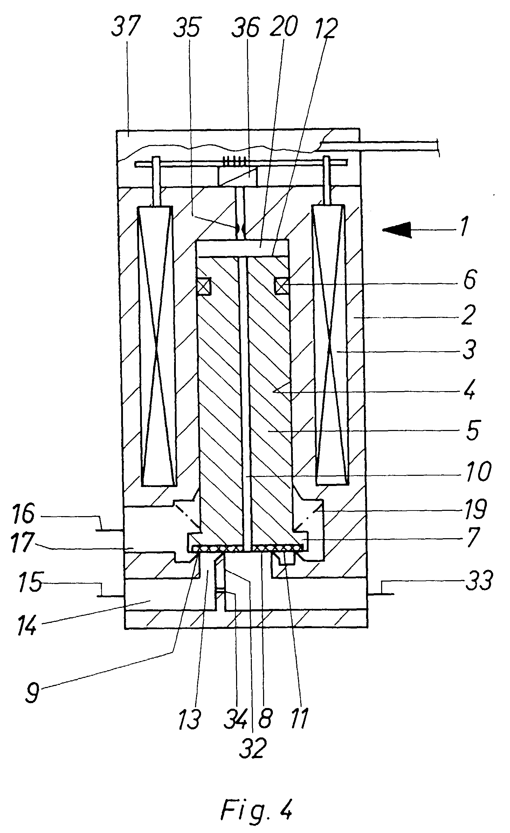

Die Besonderheit des erfindungsgemäßen Magneventils 1 gemäß Figur 4 besteht darin, daß konzentrisch und innerhalb des Ventilsitzes 9 des Einlaßventiles 8, 9 ein weiterer Ventilsitz 32 vorgesehen ist, der mit der Ventilplatte 8 ebenfalls zusammenarbeitet. Neben der Leitung 15 zu einem Verbraucher, beispielsweise auf der linken Fahrzeugseite, ist eine Leitung 33 vorgesehen, die zu einem Verbraucher auf der rechten Fahrzeugseite führen möge. Das Einlaßventil 8, 9 besitzt auf jeden Fall Schließfunktion. Das weitere Ventil 8, 32 besitzt entweder ebenfalls Schließfunktion oder aber Drosselfunktion, um eine Querdrossel zwischen der rechten und linken Fahrzeugseite zu ermöglichen. Falls das Ventil 8, 32 Schließfunktion besitzt, kann eine gesonderte Bohrung 34 vorgesehen sein, um die Querdrosselung zu ermöglichen.

Eine weitere Besonderheit des Magnetventils gemäß Figur 4 besteht darin, daß der Wirkraum 20 über eine Drossel 35 zu einem Drucksensor 36 führt, der als Druck/Spannungs-Umwandler ausgebildet sein kann. Damit erhält die Bohrung 10 eine zweite Funktion, und es ist in einfacher Weise möglich, im Oberteil des Magnetventiles 1 den Druck in der Leitung 33 (und in der Leitung 15) zu den Verbrauchern zu messen. Im Oberteil 37 des Magnetventils 1 sind auch die elektrischen Anschlüsse für die Spule 3 vorgesehen.

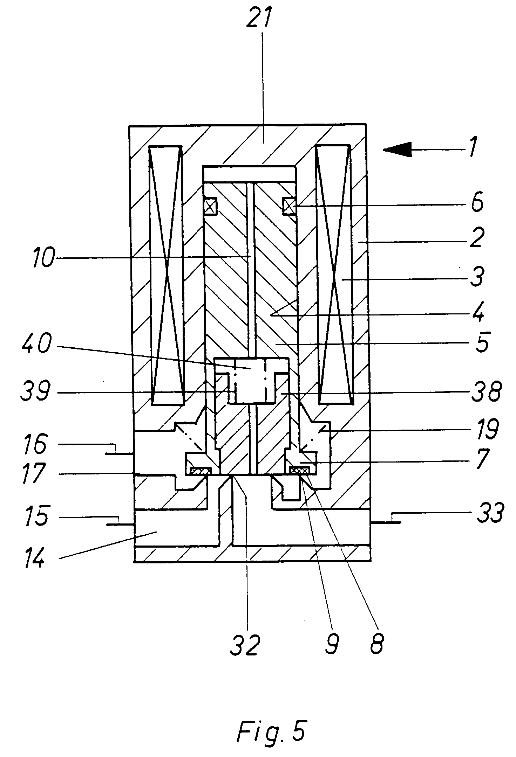

Die Ausführungsform gemäß Figur 5 baut auf den vorangehenden Ausführungsformen des Magnetventiles auf, im unteren Bereich insbesondere auf der Ausführungsform gemäß Figur 4. Um in Verbindung mit dem Ventilsitz 32 jedoch mit Sicherheit eine Schließfunktion zu erreichen, ist in dem Kern 5 ein weiterer Ventilkörper 38 vorgesehen, der auf einer Feder 39 abgestützt ist. Der Ventilkörper 38 kann in dem Kern 5 dichtend geführt sein; im allgemeinen ist dies jedoch nicht erforderlich. Die Bohrung 10 durchsetzt nicht nur den Kern 5, sondern auch den Ventilkörper 38. Die beiden Teile der Bohrung 10 haben über einen Raum 40 untereinander Anschluß.

### BEZUGSZEICHENLISTE

- 1 -: Magnetventil
- 2 -: Spulenkörper
- 3 -: Spule
- 4 -: Führungszylinder
- 5 -: Kern
- 6 -: Dichtung
- 7 -: Ventilkörper
- 8 -: Ventilplatte
- 9 -: Ventilsitz
- 10 -: Bohrung

- 11 -: Stirnfläche
- 12 -: Stirnfläche
- 13 -: Wirkraum
- 14 -: Anschluß
- 15 -: Leitung
- 16 -: Leitung
- 17 -: Anschluß
- 18 -: Vorratskammer
- 19 -: Schließfeder
- 20 -: Wirkraum

- 21 -: Joch
- 22 -: Anschluß
- 23 -: Ventilplatte
- 24 -: Ventilsitz
- 25 -: Ventilplatte
- 26 -: Rand
- 27 -: Schnellöseventil
- 28 -: Ventilmembran
- 29 -: Überströmlippe
- 30 -: Gehäuserand

- 31 -: Verteilungsraum
- 32 -: Ventilsitz
- 33 -: Leitung
- 34 -: Bohrung
- 35 -: Drossel
- 36 -: Drucksensor
- 37 -: Oberteil
- 38 -: Ventilkörper
- 39 -: Feder
- 40 -: Raum

## Patentansprüche

1. Magnetventil mit drei Anschlüssen (14, 17, 33), einer Spule (3) und einem in einem Zylinder der Spule (3) verschiebbar geführten Kern (5), wobei:
- der Kern (5) mit einem Ventilkörper (7) verbunden ist,
- dieser Ventilkörper (7) mit einem Ventilsitz (9) ein Ventil (7, 9) bildet und über die Bewegung des Kerns (5) gegenüber diesem Ventilsitz (9) steuerbar ist,
- der Kern (5) druckentlastet ausgebildet ist und in entgegengesetzte Richtungen weisende Stirnflächen (11, 12) aufweist, welche über eine Leitung (10) miteinander dauernd in Verbindung stehenden Wirkräumen (13, 20) ausgesetzt sind,
- der Kern (5) desweiteren nach Art eines Kolbens mit einer Dichtung (6) versehen ist, deren wirksamer Durchmesser dem wirksamen Durchmesser des Ventilsitzes (9) entspricht, und jene zwei durch die Dichtung (6) abgeteilten Räume an zwei der Anschlüsse (17, 33) angeschlossen sind,
**dadurch gekennzeichnet,** daß
- innerhalb und konzentrisch zum Ventilsitz (9) gehäuseseitig ein weiterer Ventilsitz (32) vorgesehen ist, der mit dem Ventilkörper (7) des Kerns (56) ein weiteres Ventil (7, 32) bildet, und daß
- zumindest der Ventilsitz (9) mit dem größeren Durchmesser Schließfunktion hat, während der Ventilsitz (32) mit dem kleineren Durchmesser entweder ebenfalls Schließfunktion oder aber lediglich Drosselfunktion besitzt.

2. Magnetventil nach Anspruch 1, **dadurch gekennzeichnet, daß** der Ventilkörper (7) unterteilt ist und einen auf einer Feder (39) abgestützten Ventilkörper (38) aufweist, der in dem Ventilkörper (7) verschiebbar gelagert ist und mit dem Ventilsitz (32) das weitere Ventil bildet.

3. Magnetventil nach Anspruch 1 oder 2, **dadurch gekennzeichnet, daß** der weitere Ventilsitz (32) zur Realisierung einer Querdrosselung eine gesonderte Bohrung (34) aufweist.

4. Magnetventil nach Anspruch 2, **dadurch gekennzeichnet, daß** der auf der Feder (39) abgestützte Ventilkörper (38) zur Realisierung der Druckentlastung des Kerns (5) durchbrochen ausgebildet ist.

## Claims

1. A solenoid valve comprising three connections (14, 17, 33), a coil (3) and a core (5) being movably guided in a cylinder of the coil (3),
- the core (5) being connected to a valve body (7),
- said valve body (7) together with a valve seat (9) constituting a valve (7, 9) and being controllable by moving of the core (5) with respect to the valve seat (9),
- the core (5) being formed to be free from pressure and comprising faces (11, 12) facing opposite directions, which are subject to effective rooms (13, 20) being constantly in connection with each other,
- the core (5) in the manner of a piston further being provided with a sealing (6), the effective diameter of which corresponds to the effective diameter of the valve seat (9), and said two rooms separated by the sealing (6) being connected to two of the three connections (17, 33),
**characterized in** that
- inside and concentric to the valve seat (9) on the side of the housing another valve seat (32) is provided, which together with the valve body (7) of the core (6) constitutes another valve (7, 32), and in that
- at least the valve seat (9) of the greater diameter fulfils a closing function, while the valve seat (32) of the smaller diameter either also fulfils a closing function or only fulfils a throttling function.

2. The solenoid valve of claim 1, **characterized in** that the valve body (7) is subdivided and comprises a valve body (38) being supported on a spring (39), the valve body (38) being movably arranged in the valve body (7) and with the valve seat (32) constituting the other valve.

3. The solenoid valve of claim 1 or 2, **characterized in** that the valve seat (32) comprises an additional bore (34) for realizing a transverse throttling.

4. The solenoid valve of claim 2, **characterized in** that the valve body (38) being supported on the spring (39) is channelled for realizing an arrangement of the core (5) being free from pressure.

## Revendications

1. Vanne magnétique présentant trois branchements (14, 17, 33), une bobine (3) et un noyau (5) guidé coulissant dans un cylindre de la bobine (3), dans laquelle :
- le noyau (5) est relié à un corps de vanne (7),
- ce corps de vanne (7) forme, avec un siège de vanne (9), une vanne (7, 9) et est commandable par le déplacement du noyau (5) par rapport à ce siège de vanne (9),
- le noyau (5) est déchargé de la pression et présente des faces frontales (11, 12) tournées dans des sens opposés, qui sont soumises à des chambres actives (13, 20) en permanence en liaison entre elles par une conduite (10),
- le noyau (5) est par ailleurs pourvu à la manière d'un piston, d'une garniture d'étanchéité (6), dont le diamètre utile correspond au diamètre utile du siège de vanne (9), et les deux chambres partagées par la garniture d'étanchéité (6), sont raccordées à deux des branchements (17, 33), caractérisée en ce que
- à l'intérieur est prévu côté boîtier et concentriquement au siège de vanne (9), un autre siège de vanne (32), qui forme une autre vanne (7, 32) avec le corps de vanne (7) du noyau (56), et en ce que
- au moins le siège de vanne (9) de plus grand diamètre a une fonction de fermeture, tandis que le siège de vanne (32) de plus petit diamètre possède soit aussi une fonction de fermeture, soit uniquement une fonction d'étranglement.

2. Vanne magnétique selon la revendication 1, caractérisée en ce que le corps de vanne (7) est partagé et présente un corps de vanne (38) soutenu sur un ressort (39) et monté de manière à pouvoir coulisser dans le corps de vanne (7) et qui forme, avec le siège de vanne (32), l'autre vanne.

3. Vanne magnétique selon la revendication 1 ou 2, caractérisée en ce que l'autre siège de vanne (32) présente un perçage (34) séparé en vue de réaliser un étranglement tranversal.

4. Vanne magnétique selon la revendication 2, caractérisée en ce que le corps de vanne (38), soutenu sur le ressort (39), est percé de part en part en vue de réaliser la décharge de pression du noyau (5).
